# EUROPEAN PATENT SPECIFICATION

(11) **EP 1 944 529 B1**
(45) Date of publication and mention of the grant of the patent: **28.12.2011**
(21) Application number: 08250078.6
(22) Date of filing: 09.01.2008
(51) Int. Cl.: F16H 63/42, F16H 61/02

(54) **Gear determination apparatus, gear determination method, gear-shift instruction apparatus and gear-shift instruction method**
Vorrichtung und Verfahren zur Bestimmung des eingelegten Gangs, Vorrichtung und Verfahren für eine Schaltanweisung
Appareil de détermination de vitesse, procédé de détermination de vitesse, appareil d'instruction de changement de vitesses, et procédé d'instruction de changement de vitesses

(30) Priority: 10.01.2007 JP 2007002861
(43) Date of publication of application: 16.07.2008
(73) Proprietor: Toyota Jidosha Kabushiki Kaisha, Aichi-ken, 471-8571 (JP)
(72) Inventor: Okubo, Tadanao c/o Toyota Jidosha Kabushiki Kaisha, Toyota-chi, Aichi-ken 471-9571 (JP); Kinoshita, Tomonori c/o Toyota Jidosha Kabushiki Kaisha, Toyota-chi, Aichi-ken 471-9571 (JP); Suga, Shojiro c/o Toyota Jidosha Kabushiki Kaisha, Toyota-chi, Aichi-ken 471-9571 (JP); Nishizawa, Jun c/o Toyota Jidosha Kabushiki Kaisha, Toyota-chi, Aichi-ken 471-9571 (JP)
(74) Representative: Albutt, Anthony John

(56) References cited:
- EP-A1- 0 651 181
- JP-A- 4 109 060
- JP-A- 62 094 427
- JP-A- 2003 019 912

## Description

### BACKGROUND OF THE INVENTION

### 1. Field of the Invention

The invention relates to a gear determination apparatus and method that determines the currently-selected gear of a transmission, and a gear-shift instruction apparatus and method that provides a driver with a gear-shift instruction based on a result of gear determination made by the gear determination apparatus, in a vehicle that includes an engine (an internal combustion engine) and the transmission which is manually operable.

### 2. Description of the Related Art

In a vehicle that includes an engine, the power output from the engine is transferred to wheels of the vehicle while the rotational speed of an engine output shaft is changed by a transmission to obtain the torque and vehicle speed that are appropriate for the vehicle to travel under the current cruising environment. Transmissions that are mounted on vehicles are grouped into automatic transmissions and manual transmissions. The automatic transmissions automatically select the optimum ratio of the rotational speed of the engine to the rotational speed of the drive wheels.

Examples of automatic transmissions include planetary gear transmissions and continuously variable transmissions (CVTs). The planetary gear transmissions select the optimum gear using a clutch; a brake, and a planetary gear set. The CVTs continuously adjust the speed ratio.

In a vehicle equipped with an automatic transmission, a shift map is stored in, for example, an ECU (Electronic Control Unit). The shift map has shift lines (gear-shift lines) that are used to select the optimum gear based on the vehicle speed and the accelerator pedal operation amount (or the throttle valve opening amount). The ECU calculates the target gear based on the vehicle speed and the accelerator pedal operation amount with reference to the shift map, and automatically selects the gear of the transmission based on the target gear.

In contrast, in a vehicle equipped with a manual transmission, basically, a driver can select any gear. Therefore, the manual transmission offers the advantage that the flexibility in the driving performance is high. For example, the manual transmission may be shifted to a higher gear after the engine speed becomes sufficiently high. In this way, the vehicle travels with sufficient drive power. At the same time, the manner in which the gear is selected and the timing of the gear-shift operation greatly differ among drivers, because selection of the gear is left to a driver's discretion. Accordingly, there is a possibility that the vehicle will travel at the gear, selected by the driver, that is different from the optimum gear. For example, if a gear lower than the optimum gear is selected when the transmission is shifted to a higher gear (upshifting operation), the fuel efficiency is deteriorated. On the other hand, .if a gear higher than the optimum gear is selected, sufficient acceleration performance cannot be obtained.

A gear-shift instruction apparatus (GSI) is suggested to minimize the above-described disadvantages of a manual transmission (refer to, for example, Japanese Patent Application Publication No. 62-94427 (JP-A-62-94427), and Japanese Patent Application Publication No. 2003-19912 (JP-A-2003-19912)).

In a gear-shift instruction apparatus mounted on a vehicle, a shift map (for example, a shift map that has shift lines which are substantially the same as those used in a shift map for the automatic transmission described above) is stored in, for example, an ECU. The shift map defines the gear that is optimal to achieve the highest possible fuel efficiency based on the vehicle cruising condition, for example, a vehicle speed and a engine load (e.g. an accelerator pedal operation amount). The ECU calculates the target gear based on the vehicle speed and the accelerator pedal operation amount with reference to the shift map. The ECU then compares the target gear with the gear actually selected by the driver, and provides the driver with a gear-shift instruction based on the result of the comparison.

More specifically, if the gear actually selected by the driver (the currently-selected gear) is lower than the target gear, an instruction to shift the transmission to a higher gear is provided to the driver, for example, by illuminating an upshifting lamp. On the other hand, if the currently-selected gear is higher than the target gear, an instruction to shift the transmission to a lower gear is provided to the driver, for example, by illuminating a downshifting lamp. If the gear actually selected by the driver matches the target gear calculated based on the shift map, a gear-shift instruction that the currently-selected gear is appropriate and should be maintained is provided to the driver by keeping both the upshifting lamp and the downshifting lamp off.

In this type of gear-shift instruction apparatus, it is necessary to determine the currently-selected gear of the transmission. To determine the gear of the transmission, a gear position sensor is provided to determine the currently-selected gear based on a signal from the gear position sensor. However, if the gear position sensor is additionally provided, an additional cost for the gear position sensor is required, and more time and efforts are required to dispose the gear position sensor.

To avoid such disadvantages, the currently-selected gear is determined in the following method described in, for example, Japanese Patent Application Publication No. 04-109060 (JP-A-04-109060). According to the method, the engine speed and the vehicle speed that are detected by sensors, which are usually provided in a vehicle, are used, and the currently-selected gear is determined based on the ratio of the engine speed to the vehicle speed (engine speed / vehicle speed) which corresponds to the gear ratio (hereinafter, referred to as "NVR" where appropriate). The rotational speed of the wheel is detected by a wheel speed sensor (for example, an electromagnetic pick-up sensor). Then, the vehicle speed, which is used to determine the currently-selected gear, is calculated based on the pulse signals from the wheel speed sensor.

When the currently-selected gear is determined based on the NVR, there is a possibility that an erroneous determination will be made on the currently-selected gear during hard acceleration or hard deceleration, because the cycles and accuracy of calculation differ between the engine speed and the vehicle speed.

More specifically, when the vehicle speed is calculated based on a signal from the wheel speed sensor (the wheel speed pulses), the average of several wheel speed pulses (for example, 4 or 5 pulses) is calculated and the vehicle speed is then calculated based on the average, in order to avoid an erroneous calculation of the vehicle speed caused by, for example, noise. Accordingly, when the engine speed abruptly changes during hard acceleration or hard deceleration, the NVR deviates from the theoretical value because calculation of the vehicle speed lags behind calculation of the engine speed. As a result, the ECU makes an erroneous determination on the currently-selected gear. Especially, when the vehicle is traveling at a low vehicle speed (when the engine speed is low), the interval between the wheel speed pulses is long, and therefore updating of the pulse is delayed. Therefore, calculation of the wheel speed lags behind calculation of the engine speed by a larger amount. As a result, an erroneous determination is more likely to be made on the currently-selected gear.

An erroneous determination that is likely to be made on the currently-selected gear during hard acceleration or hard deceleration will be described in detail below.

### NVR

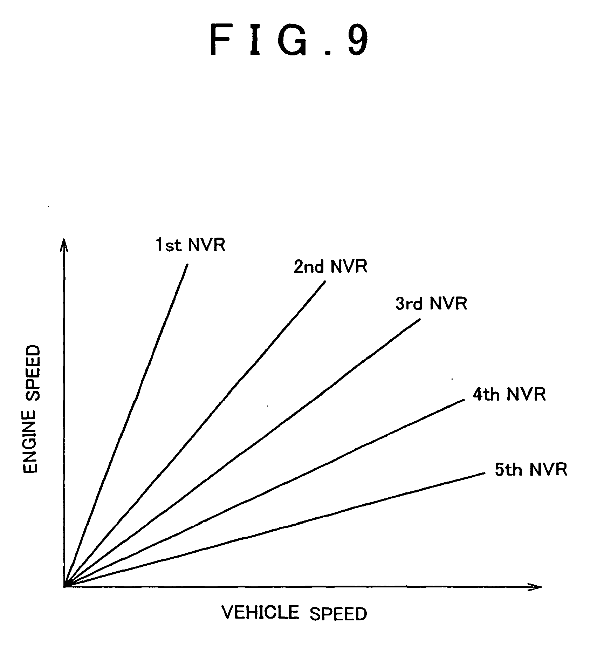

First, the NVR will be described. As described above, the NVR is the ratio of the engine speed to the vehicle speed (engine speed / vehicle speed). For example, as shown in FIG. 9, the theoretical NVR corresponding to each of 1st to 5th gears is constant. When the calculated NVR does not greatly deviate from the theoretical NVR, it is possible to accurately determine the curiently-selected gear.

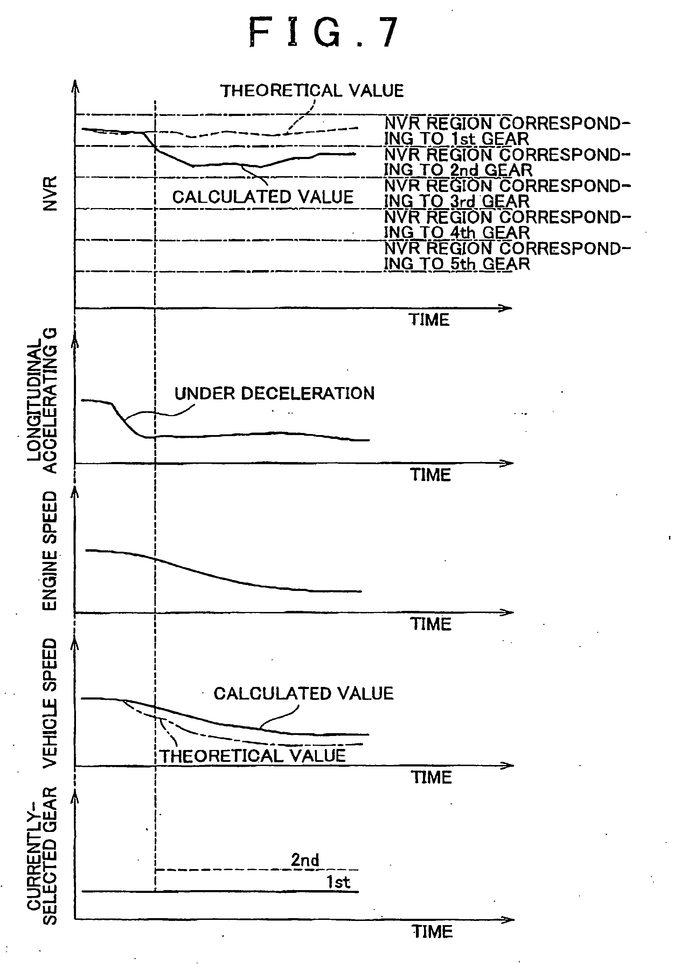

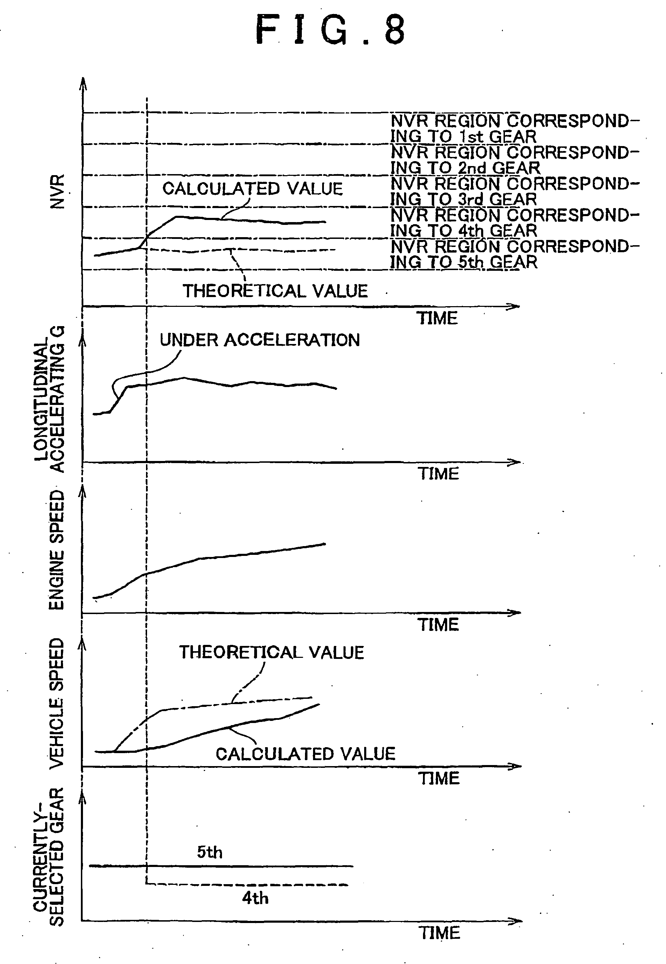

When the currently-selected gear is determined based on the NVR, for example, as shown in FIG. 7 or FIG 8, a map that has NVR regions corresponding to the gears (Ist to 5th gears) is used. Then, the currently-selected gear is determined by determining the NVR region in which the current NVR is present.

### During hard deceleration

For example, if the vehicle undergoes hard deceleration when 1st gear has been selected, the engine speed drops sharply. If the vehicle speed is calculated accurately in accordance with the sharply dropping engine speed, the calculated NVR does not deviate from the theoretical value, or the calculated NVR deviates from the theoretical value by only a small amount.

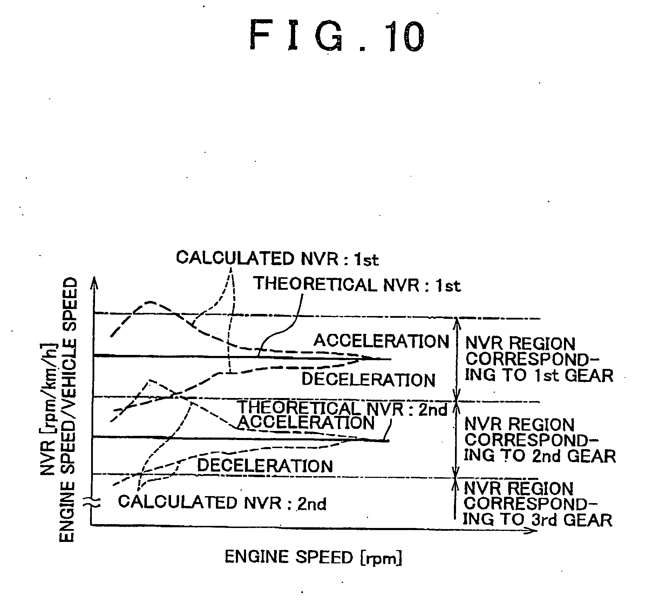

However, when the vehicle speed is calculated based on the wheel speed pulses, as mentioned before, calculation of the vehicle speed lags behind calculation of the engine speed during hard deceleration. Accordingly, the rate of decrease iw the vehicle speed is lower than the rate of decrease in the engine speed. As shown in FIG 10, the calculated NVR at 1st gear (during deceleration) is lower than the theoretical NVR at 1st gear. If the deviation of the calculated NVR at 1st gear from the theoretical NVR at 1st gear is large, the calculated NVR at lst gear falls within the NVR region corresponding to 2nd gear. As a result, it is erroneously determined that the currently-selected gear is 2nd gear, despite the fact that the currently-selected gear of the transmission is lst gear. If such an erroneous determination is made, when the target gear that is calculated based on, for example, the shift map is 1st gear, an erroneous instruction to shift the transmission to a lower gear is issued because the erroneously determined currently-selected gear (2nd) differs from the target gear (1st).

If the vehicle undergoes hard deceleration when 2nd gear has been selected, as shown in FIG. 10, the calculated NVR at 2nd gear (during deceleration) falls within the NVR region corresponding to 3rd gear. Therefore, it is erroneously determined that the currently-selected gear is 3rd gear. At other gears, there is also a possibility that such an erroneous determination will be made.

### During hard acceleration

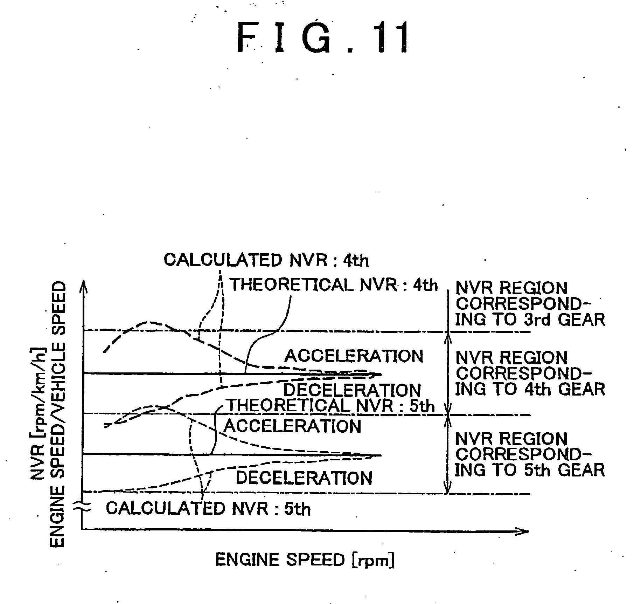

For example, if the vehicle undergoes hard acceleration when the highest gear (e.g. 5th gear) has been selected, the engine speed rises sharply. If calculation of the vehicle speed lags behind calculation of the engine speed, the vehicle speed cannot be accurately calculated in accordance with the abruptly increasing engine speed. Therefore, the rate of increase in the vehicle speed is lower than the rate of increase in the engine speed. Then, as shown in FIG. 11, the calculated NVR at 5th gear (during acceleration) is higher than the theoretical NVR at 5th gear. If the deviation of the calculated NVR at 5th gear from the theoretical NVR at 5th gear is large, the calculated NVR at 5th gear falls within the NVR region corresponding to 4th gear. As a result, it is erroneously determined that the currently-selected gear is 4th gear (the second highest gear) despite the fact that the currently-selected gear of the transmission is 5th gear. If such an erroneous determination is made, when the target gear which is determined based on, for example, the shift map is the highest gear (5th gear), an erroneous instruction to shift the transmission to a higher gear is issued because the erroneously determined currently-selected gear (4th) differs from the target gear (5th).

If the vehicle undergoes hard acceleration when the 4th gear has been selected, as shown in FIG. 11, the calculated NVR at 4th gear (during acceleration) falls within the NVR region corresponding to 3rd gear. Therefore, it is erroneously determined that the currently-selected gear is 3rd gear. At other gears, there is also a possibility that such an erroneous determination will be made.

European Patent Application EP0651181, which represents the closest prior art, discloses a control system/method for a vehicular automated mechanical transmission which will compare input signals indicative at input shaft speed to the product of input signals indicative of output shaft speed multiplied by gear ration to develop control parameters indicative of drivetrain torque magnitude and/or phase requiring a drivetrain torque transducer.

### SUMMARY OF THE INVENTION

The invention provides a gear determination apparatus and method with which an erroneous determination on the currently-selected gear under hard acceleration or hard deceleration of a vehicle is avoided, and a gear-shift instruction apparatus and method with which issuance of an erroneous instruction under hard acceleration or hard deceleration of the vehicle is avoided.

A first aspect of the invention relates to a gear determination apparatus that is adapted to be applied to a vehicle including an engine and a transmission that is manually operable, and that determines the gear of the transmission. The gear determination apparatus includes: an engine speed detection unit that detects the rotational speed of the engine; a vehicle speed detection unit that detects the vehicle speed based on the wheel speed; a gear determination unit that determines the currently-selected gear based on the ratio of the engine speed to the vehicle speed; and a vehicle speed change detection unit that detects the rate of change in the vehicle speed. The gear determination unit is configured to prohibit the determination of the currently-selected gear when the rate of change in the vehicle speed, which is detected by the vehicle speed change detection unit, is equal to or higher than a predetermined value.

In the gear determination apparatus according to the first aspect of the invention, when the gear determination unit prohibits determination of the currently-selected gear based on the ratio of the engine speed to the vehicle speed, the gear determination unit may continuously set the gear, which is determined immediately before prohibiting the determination of the currently-selected gear, as the currently-selected gear. Alternatively, the gear determination unit may determine that the currently-selected gear is indeterminate.

With the gear determination apparatus according to the first aspect of the invention, when the rate of change in the vehicle speed is equal to or higher than the predetermined value due to hard deceleration or hard acceleration, the determination of the currently-selected gear based on the ratio of the engine speed to the vehicle speed (NVR) is prohibited, and, for example, the gear (Nth gear) that is determined immediately before prohibiting the determination of the currently-selected gear is continuously set as the currently-selected gear. Therefore, it is possible to appropriately determine the currently-selected gear, even if the calculated NVR is lower or higher than the theoretical NVR because of a delay in calculation of the vehicle speed due to hard deceleration or hard acceleration and therefore the calculated NVR shifts to the NVR region corresponding to a gear ((N + 1)th gear or (N - 1)th gear) different from the currently-selected gear (Nth gear). Therefore, an erroneous determination on the currently-selected gear is avoided. As a result, it is possible to avoid the problem that, for example, a downshifting instruction is erroneously issued when 1st gear has been selected or an upshifting instruction is erroneously issued when the highest gear has been selected.

In the gear determination apparatus according to the first aspect of the invention, the determination of the currently-selected gear may be prohibited when the rate of change in the vehicle speed is equal to or higher than the predetermined value and the ratio of the engine speed to the vehicle speed has shifted to the ratio region corresponding to the gear that is higher or lower than the gear that is determined as the currently-selected gear immediately before the vehicle speed starts changing (more specifically, when the NVR has shifted to the NVR region corresponding to (N + 1)th gear or the NVR region corresponding to (N - 1)th gear). With this configuration, the determination of the currently-selected gear based on the NVR is not prohibited until the NVR has shifted from one NVR region to another NVR region, even if the calculated NVR is higher or lower than the theoretical NVR. Therefore, it is possible to appropriately prohibit the determination of the currently-selected gear.

In the first aspect of the invention, an acceleration detection unit (an acceleration sensor) that detects the longitudinal acceleration of the vehicle may be provided as the vehicle speed change detection unit. The determination of the currently-selected gear may be prohibited, when the absolute value of the longitudinal acceleration or the longitudinal deceleration, which is detected by the acceleration detection unit, is equal to or larger than a predetermined threshold value.

A second aspect of the invention relates to a gear-shift instruction apparatus that is adapted to be applied to a vehicle including an engine and a transmission that is manually operable, and that provides a driver with a gear-shift instruction based on the cruising condition of the vehicle. The gear-shift instruction apparatus includes: the gear determination apparatus according to the first aspect of the invention; and a gear-shift instruction control unit that provides the driver with a gear-shift instruction based on the currently-selected gear that is determined by the gear determination unit of said gear determination apparatus.

With the gear-shift instruction apparatus according to the second aspect of the invention, it is possible to avoid issuance of an erroneous instruction based on an erroneous determination on the currently-selected gear. As a result, it is possible to avoid the problem that, for example, a downshifting instruction is erroneously issued when 1st gear has been selected or an upshifting instruction is erroneously issued when the highest gear has been selected.

In the gear-shift instruction apparatus according to the second aspect of the invention, the target gear of the transmission, which is calculated based on the cruising condition of the vehicle, may be compared with the currently-selected gear that is determined by the gear determination unit of said gear determination apparatus, and a gear-shift instruction may be provided based on the result of comparison. More specifically, the target gear may be calculated based on the vehicle speed and the accelerator pedal operation amount or based on the vehicle speed and the throttle valve opening amount with reference to a map. Then, the calculated target gear may be compared with the currently-selected gear.

A third aspect of the invention relates to a gear determination method that is adapted to be applied to a vehicle including an engine and a transmission that is manually operable, and that determines the gear of the transmission. According to the gear determination method, the rotational speed of the engine is detected, the vehicle speed is detected based on the wheel speed, the currently-selected gear is determined based on the ratio of the engine speed to the vehicle speed, the rate of change in the vehicle speed is detected, and the determination of the currently-selected gear is prohibited when the detected rate of change in the vehicle speed is equal to or higher than a predetermined value.

### BRIEF DESCRIPTION OF THE DRAWINGS

The foregoing and further objects, features and advantages of the invention will become apparent from the following description of an example embodiment with reference to the accompanying drawings, wherein the same or corresponding portions will be denoted by the same reference numerals and wherein:
FIG 1 is a side view showing the structure of a main portion of a vehicle to which the invention is applied;
FIG 2 is a front view showing a combination meter;
FIG. 3 is a block diagram showing the configuration of a control system according to an embodiment of the invention;
FIG 4 is a shift map that is used in a gear-shift instruction control;
FIG. 5A and FIG 5B are views showing the conditions of an upshifting lamp and a downshift lamp, FIG. 5A showing the condition where an upshifting instruction is issued, and FIG. 5B showing the condition where a downshifting instruction is issued;
FIG 6 is a flowchart showing the routine of the gear-shift instruction control;
FIG. 7 is a time chart illustrating time-changes in the vehicle condition caused by the gear-shift instruction control;
FIG. 8 is a time chart illustrating time-changes in the vehicle condition caused by the gear-shift instruction control;
FIG. 9 is a graph showing the ratio of the engine speed to the vehicle speed (NVR);
FIG. 10 is a graph showing the calculated NVR and the theoretical NVR under hard acceleration and hard deceleration; and
FIG. 11 is a graph showing the calculated NVR and the theoretical NVR under hard acceleration and hard deceleration.

### DETAILED DESCRIPTION OF THE EXAMPLE EMBODIMENT

Hereafter, an embodiment of the invention will be described with reference to the accompanying drawings.

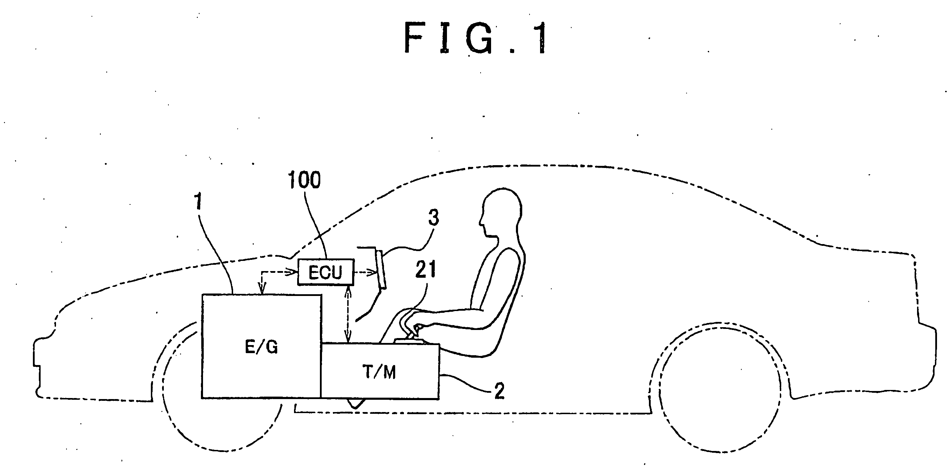

First, a vehicle, to which the invention is applied, will be described with reference to FIG. 1.

The vehicle in the embodiment of the invention includes an engine (an internal combustion engine) 1, a manual transmission 2, a combination meter 3, and an ECU 100, which are arranged in a manner shown in FIG 1. In FIG. 1, the body of the vehicle is indicated by the chain double-dashed lines.

The manual transmission 2 is, for example, a five-speed (1st to 5th) transmission. A shift knob 21 is provided in a vehicle compartment. The shift knob 21 is used to manually change gears of the manual transmission 2. '

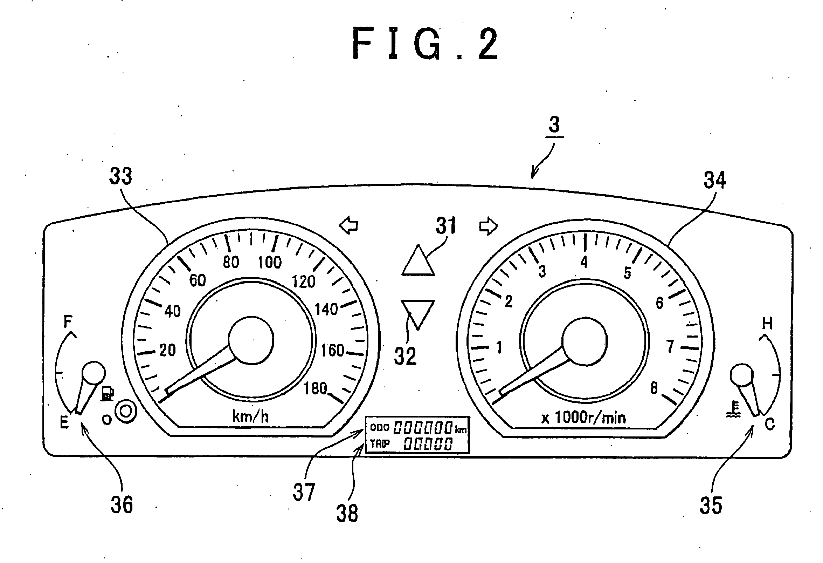

The combination meter 3 is provided in a dashboard that is arranged in front of a driver's seat in the vehicle compartment. As shown in FIG. 2, the combination meter 3 includes a speedometer 33, a tachometer 34, a water temperature gauge 35, a fuel gauge 36, an odometer 37, a trip meter 38, and various warning indicator lamps.

In the embodiment of the invention, there is provided a gear-shift instruction apparatus which gives an instruction concerning the gear to which the manual transmission 2 should be shifted based on the vehicle cruising condition in order to, for example, achieve the highest possible fuel efficiency. The gear-shift instruction apparatus will be described below.

An upshifting lamp 31 and a downshifting lamp 32, which serve as display units that indicate gear-shift instructions, are provided in the combination meter 3. The upshifting lamp 31 illuminates when an instruction to shift the manual transmission 2 to a higher gear is issued. The downshifting lamp 32 illuminates when an instruction to shift the manual transmission 2 to a lower gear is issued. These upshifting lamp 31 and downshifting lamp 32 are formed of, for example, LEDs. The ECU 100 controls the illumination/non-illumination states of the upshifting lamp 31 and the downshifting lamp 32. '

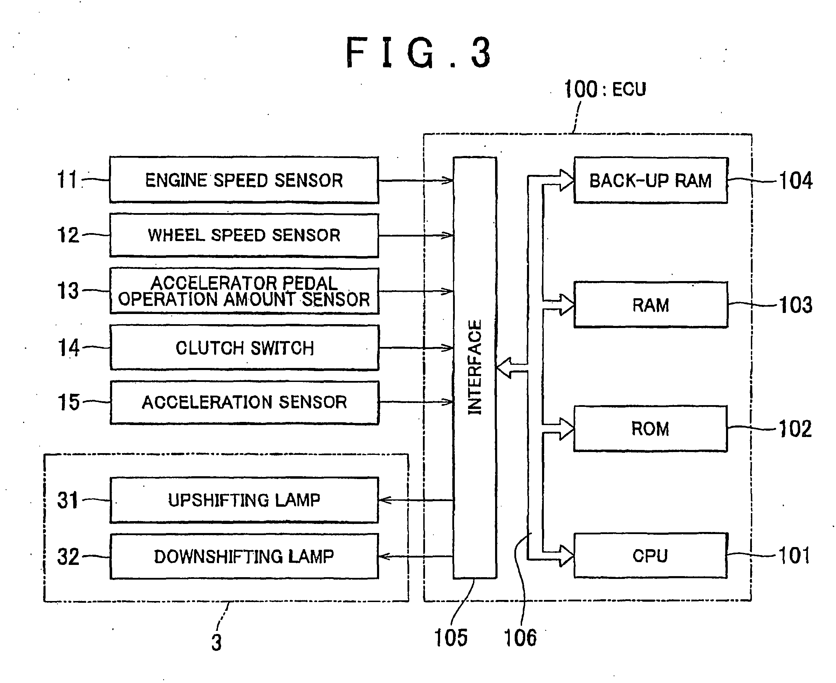

The ECU 100 includes a CPU 101, a ROM 102, a RAM 103, a back-up RAM 104, etc., as shown in FIG. 3.

The ROM 102 stores a program for the control related to the basic vehicle operation. In addition, the ROM 102 stores various programs including a program for executing a gear-shift instruction control according to which the gear of the manual transmission 2 is selected based on the vehicle cruising condition in order to achieve the highest possible fuel efficiency. The gear-shift instruction control will be described later in detail.

The CPU 101 executes a computation based on the various control programs and maps stored in the ROM 102. The RAM 103 is a memory that temporarily stores a result of the computation executed by the CPU 101 and data transmitted from various sensors. The back-up RAM 104 is a nonvolatile memory that stores the data, etc. which should be stored, when the engine 1 is stopped.

These CPU 101, ROM 102, RAM 103, and back-up RAM 104 are connected with each other by a bus 106, and are connected with an interface 105.

Various sensors such as an engine speed sensor 11 that detects the speed of the engine 1, a wheel speed sensor 12 that detects the wheel speed, an accelerator pedal operation amount sensor 13 that detects the operation amount of an accelerator pedal, a clutch switch 14 that is provided near a clutch pedal, an acceleration sensor 15 that detects the longitudinal acceleration G or the longitudinal deceleration G of the vehicle are connected to the interface 105. In addition, the upshifting lamp 31, the downshifting lamp 32, etc. of the combination meter 3 are connected to the interface 105. The ECU100 executes the following gear-shift instruction control based on detection signals from the various sensors described above.

The engine speed sensor 11 used in the embodiment of the invention is a sensor that outputs pulse signals, for example, an electromagnetic pick-up sensor. The ECU 100 receives a pulse signal from the engine speed sensor 11, and calculates the engine speed based on the pulse intervals of the pulse signal.

The wheel speed sensor 12 is also a sensor that outputs pulse signals, for example, an electromagnetic pick-up sensor. The ECU 100 receives a pulse signal (wheel speed pulses) from the wheel speed sensor 12, and calculates the vehicle speed based on the pulse intervals of the pulse signal. The average of several wheel speed pulses (for example, 4 or 5 pulses) is calculated and then the vehicle speed is calculated based on the average, in order to avoid erroneous calculation of the vehicle speed caused by, for example, noise.

A gear determination apparatus is formed of the engine speed sensor 1l, the wheel speed sensor 12, the acceleration sensor 15, the ECU 100, etc. The gear-shift instruction apparatus is formed of the engine speed sensor 11, the wheel speed sensor 12, the acceleration sensor 15, the ECU 100, the upshifting lamp 31 and downshifting lamp 32, which serve as the display units that indicate gear-shift instructions, etc.

### Gear-shift instruction control

First, the shift map and the gear determination map, which are used in the gear-shift instruction control according to the embodiment of the invention, will be described.

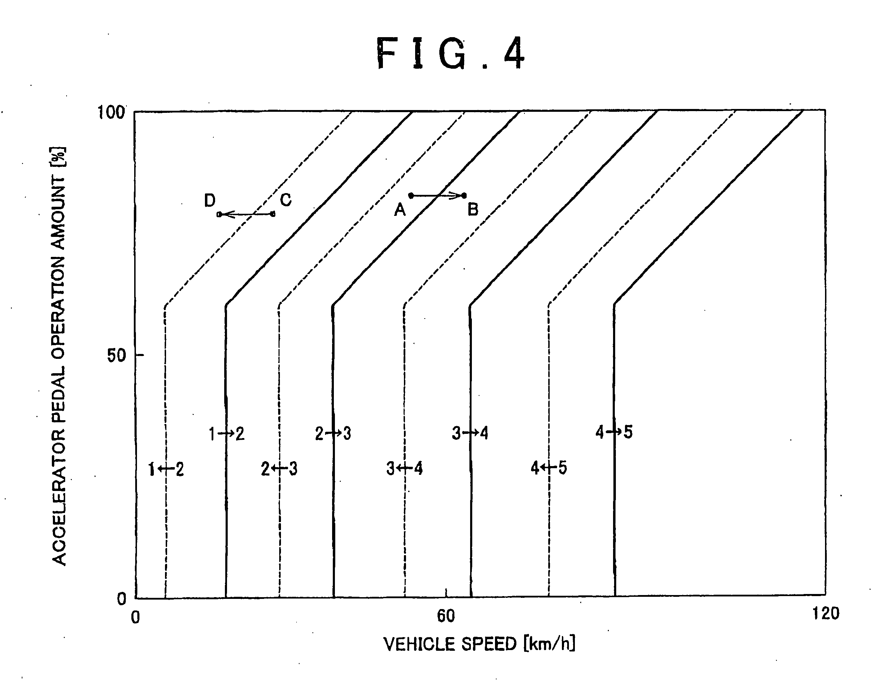

As shown in FIG. 4, the shift map is prepared using the vehicle speed and the accelerator pedal operation amount as parameters. The shift map has multiple regions which are used to determine the optimum gear to achieve the highest possible fuel efficiency, based on the vehicle speed and the accelerator pedal operation amount. The shift map is stored in the ROM 102 of the ECU 100. The shift map is partitioned into multiple regions by multiple shift lines (gear-shift lines).

In the shift map shown in FIG. 4, the upshifting lines (shift lines) are indicated by the solid lines, and the downshifting lines (shift lines) are indicated by the dashed lines. In addition, whether the manual transmission 2 is shifted to a higher gear or lower gear is indicated by the direction of an arrow, and the gear from which the manual transmission 2 is shifted and the gear to which the manual transmission 2 is shifted are indicated in figures.

The gear determination map is used to determine the currently-selected gear of the manual transmission 2, and stored in the ROM 102 of the ECU 100. For example, as shown in FIG 7 and FIG. 8, the gear determination map has NVR regions which correspond to 1st to 5th gears, and which are used to determine the currently-selected gear. For example, if the NVR calculated based on the engine speed and vehicle speed is in the NVR region corresponding to 1st gear, it is determined that the currently-selected gear is 1st gear. If the calculated NVR has shifted from the NVR region corresponding to 1st gear to the NVR region corresponding to 2nd gear, it is determined that the currently-selected gear is 2nd gear (NVR region shift).

Next, the basic routine of the gear-shift instruction control, which is executed by the gear-shift instruction apparatus, will be described.

At first, the ECU 100 determines the currently-selected gear (the actual gear) of the manual transmission 2. More specifically, the ECU 100 calculates the engine speed based on a signal from the engine speed sensor 11, and the vehicle speed based on a signal from the wheel speed sensor 12. Then, the ECU 100 determines the currently-selected gear based on the ratio of the engine speed to the vehicle speed with reference to the gear determination map (see FIGs. 7 and 8).

In addition, the ECU 100 calculates the vehicle speed based on a signal from the wheel speed sensor 12, and the accelerator pedal operation amount based on a signal from the accelerator pedal operation sensor 13. The ECU 100 then determines the target gear to which the manual transmission 2 should be shifted to realize the desirable cruising condition for achieving the highest possible fuel efficiency, based on the vehicle speed and the accelerator pedal operation amount with reference to the shift map shown in FIG. 4. Next, the ECU 100 compares the target gear with the currently-selected gear determined in the above-described manner, and determines whether gears should be changed.

If it is determined that the currently-selected gear need not be changed and should be maintained, in other words, if the currently-selected gear has been selected appropriately and matches the target gear, both the upshifting lamp 31 and the downshifting lamp 32 are kept off. The state where both the upshifting lamp 31 and the downshifting lamp 32 are kept off is the information based on which the driver is notified that the currently-selected gear is appropriate. The state where both the upshifting lamp 31 and the downshifting lamp 32 are kept off is included in a "gear-shift instruction" according to the invention.

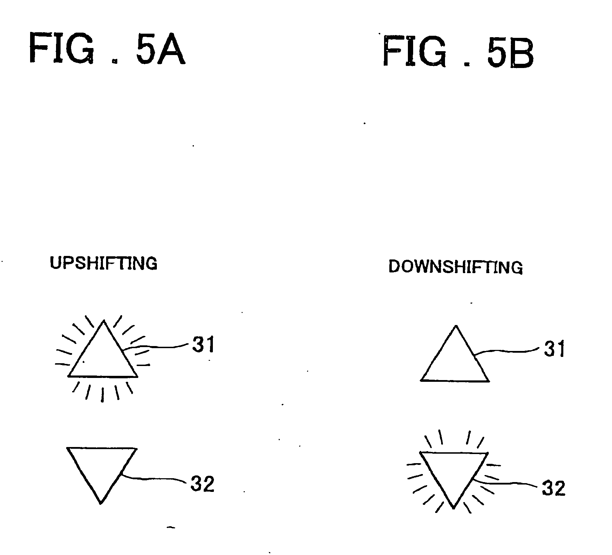

On the other hand, if it is determined that gears should be changed and the manual transmission 2 should be shifted to a higher gear, as shown in FIG. 5A, only the upshifting lamp 31 is illuminated. More specifically, for example, if the vehicle speed increases and the NVR has shifted from point A to point B in FIG. 4 while the vehicle is traveling at 2nd gear, the NVR crosses the shift line indicating a gear-shift from 2nd gear to 3rd gear. Accordingly, the target gear calculated based on the shift map is 3rd gear, and the target gear is different from the currently-selected gear, that is, 2nd gear. In such a case, only the upshifting lamp 31 is illuminated to instruct the driver to shift the manual transmission 2 to a higher gear.

If it is determined that gears should be changed and the manual transmission 2 should be shifted to a lower gear, as shown in FIG. 5B, only the downshifting lamp 32 is illuminated. More specifically, for example, if the vehicle speed decreases due to an increase in a resistance to vehicle cruising (for example, when the vehicle is traveling on an uphill slope) and the NVR has shifted from point C to point D in FIG. 4 while the vehicle is traveling at 2nd gear, the NVR crosses the shift line indicating a gear-shift from 2nd gear to 1st gear. Accordingly, the target gear calculated based on the shift map is 1st gear, and the target gear is different from the currently-selected gear, that is, 2nd gear. In such a case, only the downshifting lamp 32 is illuminated to instruct the driver to shift the manual transmission 2 to a lower gear.

When the currently-selected gear is determined based on the NVR, there is a possibility that the currently-selected gear will be erroneously determined during hard acceleration or hard deceleration, because there is a difference in calculation speed (pulse updating speed) between the engine speed and the vehicle speed. This will be described in detail below. '

As described above, the average of several wheel speed pulses (for example, 4 or 5 pulses) of the signal from the wheel speed sensor 12 is calculated and the vehicle speed is calculated based on the average, in order to avoid erroneous calculation of the vehicle speed caused by, for example, noise. Accordingly, when the engine speed abruptly changes under hard acceleration or hard deceleration, calculation of the vehicle speed lags behind calculation of the engine speed. When the vehicle undergoes hard deceleration, the NVR is lower than the regular value (the theoretical value) due to a delay in calculation of the vehicle speed. Therefore, there is a possibility that the ECU 100 will erroneously determine the currently-selected gear. On the other hand, when the vehicle undergoes hard acceleration, the NVR is higher than the regular value (the theoretical value). Therefore, there is a possibility that the ECU 100 will erroneously determine the currently-selected gear.

More specifically, if the vehicle undergoes hard deceleration when 1st gear of the manual transmission 2 has been selected, as shown in FIG. 7, the calculated vehicle speed is higher than the theoretical value. Therefore, the calculated NVR (engine speed / vehicle speed) is lower than the theoretical value. When the calculated NVR has shifted from the NVR region corresponding to 1st gear to the NVR region corresponding to 2nd gear, it is erroneously determined that the currently-selected gear is 2nd gear despite the fact that the currently-selected gear of the manual transmission 2 is 1 st gear, as shown by the dashed line indicating the currently-selected gear in FIG. 7. If the currently-selected gear is erroneously determined as described above, when the target gear calculated with reference to the shift map shown in FIG. 4 is 1st gear, the erroneously determined currently-selected gear (2nd gear) differs from the target gear (1st gear). As a result, the downshifting lamp 32 is erroneously illuminated (an erroneous instruction is issued).

In such a condition, although the currently-selected gear is 1st gear (the lowest gear), an instruction to shift the manual transmission 2 to a lower gear is issued. Accordingly, the driver may distrust the gear-shift instruction, or judge that a malfunction has occurred.

If the vehicle undergoes hard deceleration when a gear other than 1st gear has been selected, there is a possibility that the currently-selected gear will be erroneously determined when the NVR has shifted to one NVR region to another NVR region (for example, the NVR has shifted from the NVR region corresponding to 2nd gear to the NVR region corresponding to 3rd gear).

Next, the case in which the vehicle undergoes hard acceleration will be described. For example, if the vehicle undergoes hard acceleration when 5th gear of the manual transmission 2 has been selected, as shown in FIG. 8, the calculated vehicle speed is lower than the theoretical value due to a delay in calculation of the vehicle speed. Accordingly, the calculated NVR (engine speed / vehicle speed) is higher than the theoretical value. As a result, when the calculated NVR has shifted from the NVR region corresponding to 5th gear to the NVR region corresponding to 4th gear, it is erroneously determined that the currently-selected gear is 4th gear despite the fact that the currently-selected gear of the manual transmission 2 is 5th gear (see the dashed line indicating the erroneously determined currently-selected gear in FIG. 8). If the currently-selected gear is erroneously determined as described above, when the target gear calculated with reference to the shift map shown in FIG. 4 is 5th gear, the erroneously determined currently-selected gear (4th gear) differs from the target gear (5th gear). As a result, the upshifting lamp 31 is erroneously illuminated (an erroneous instruction is issued).

If such a situation occurs, an instruction to shift the manual transmission 2 to a higher gear is issued despite the fact that the currently-selected gear is the highest gear (5th gear). Accordingly, the driver may distrust the gear-shift instruction, or judge that a malfunction has occurred.

If the vehicle undergoes hard acceleration when a gear other than 5th gear has been selected, there is a possibility that the currently-selected gear will be erroneously determined when the calculated NVR has shifted from one NVR region to another NVR region (for example, when the calculated NVR has shifted from the NVR region corresponding to 4th gear to the NVR region corresponding to 3rd gear).

Therefore, according to the embodiment of the invention, when the rate of change in the vehicle speed (more specifically, the absolute value of the deceleration G or acceleration G) is equal to or higher than a predetermined value, and the calculated NVR has shifted from one NVR region to another NVR region, the following control is executed in order to avoid erroneous determination on the currently-selected gear, which may be made when the vehicle undergoes hard acceleration or hard deceleration. In the control, determination of the currently-selected gear based on the NVR is prohibited and the gear that is determined immediately before prohibiting the gear determination is continuously set as the currently-selected gear.

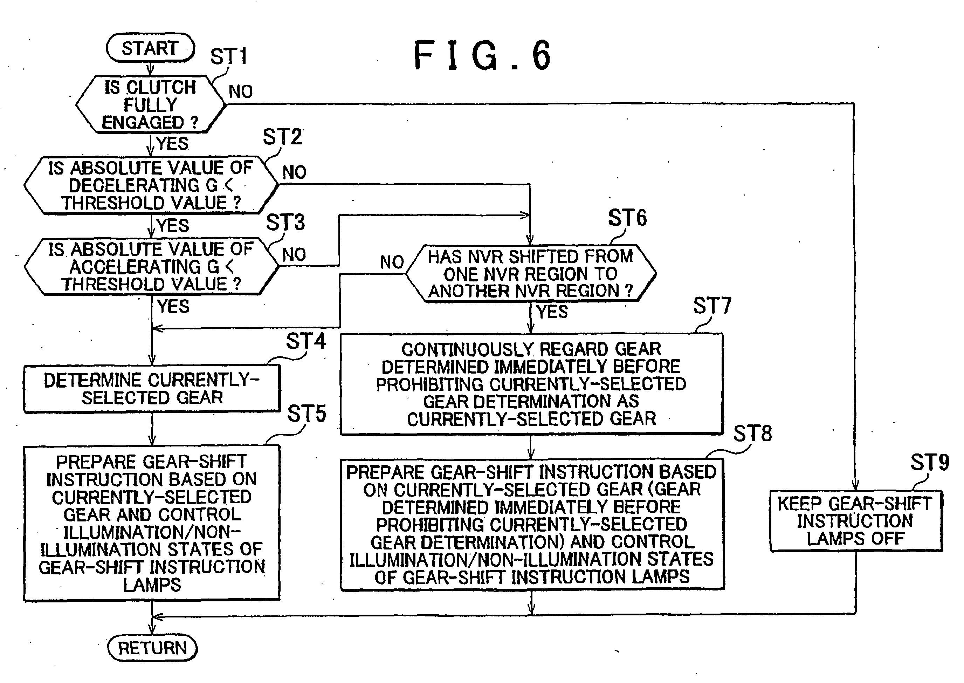

An example of the control (the gear-shift instruction control) will be described with reference to the flowchart in FIG. 6, and timing charts in FIG. 7 and FIG. 8. The gear-shift instruction control routine is periodically executed by the ECU 100 at the predetermined intervals (for example, several milliseconds).

First, the ECU 100 determines whether a clutch is fully engaged based on a signal from the clutch switch 14. If a negative determination is made in step ST1, in other words, if it is determined that the clutch is disengaged; it is impossible to determine the currently-selected gear and to prepare a gear-shift instruction. Therefore, the ECU 100 determines in step ST9 that both of the upshifting lamp 31 and downshifting lamp 32 should be kept off, after which the routine ends. On the other hand, if an affirmative determination is made in step ST1, the ECU 100 executes step ST2.

In step ST2, the ECU 100 determines whether the absolute value of the deceleration G, which is determined based on a signal from the acceleration sensor 15, is smaller than a predetermined threshold value. If an affirmative determination is made in step ST2, in other words, if it is determined that the vehicle is not under hard deceleration, the ECU 100 executes step ST3. On the other hand, if a negative determination is made in step ST2, in other words, if it is determined that the absolute value of the deceleration G is equal to or larger than the threshold value, the ECU 100 determines that the vehicle is under hard deceleration, and executes step ST6.

In step ST3, the ECU 100 determines whether the absolute value of the acceleration G, which is determined based on a signal from the acceleration sensor 15, is smaller than a predetermined threshold value. If an affirmative determination is made in step ST3, in other words, if it is determined that the vehicle is not under hard acceleration, the ECU 100 executes step ST4. On the other hand, if a negative determination is made in step ST3, in other words, if it is determined that the absolute value of the acceleration G is equal to or larger than the threshold value, the ECU 100 determines that the vehicle is under hard acceleration, and executes step ST6.

The deceleration G, at which the calculated NVR is lower than the NVR due to delay in calculation of the vehicle speed under hard deceleration, is determined by experiment, calculation, etc. Then, the threshold, which is used to make a determination as to whether the vehicle is under hard deceleration in step ST2, is set to as an appropriate value with the deceleration G determined based on the experiment, calculation, etc. taken into account.

Similarly, the deceleration G, at which the calculated NVR is higher than the NVR due to delay in calculation of the vehicle speed under hard acceleration, is determined by experiment, calculation, etc. Then, the threshold, which is used to make a determination as to whether the vehicle is under hard acceleration in step ST3, is set to as an appropriate value with the acceleration G determined based on the experiment, calculation, etc. taken into account.

In step ST4, the ECU 100 determines the currently-selected gear of the manual transmission 2. More specifically, the ECU 100 calculates the engine speed based on a signal from the engine speed sensor 11, and the vehicle speed based on a signal from the wheel speed sensor 12. Then, the ECU 100 determines the currently-selected gear based on the ratio of the engine speed to the vehicle speed (NVR) with reference to the gear determination map (see FIG. 7 and FIG. 8).

Next, in step ST5, the ECU 100 prepares a gear-shift instruction, and controls the illumination/non-illumination states of the upshifting lamp 3I and the downshifting lamp 32. More specifically, the ECU 100 calculates the vehicle speed based on a signal from the wheel speed sensor 12, and the accelerator pedal operation amount based on a signal from the accelerator pedal operation sensor I3. The ECU 100 then calculates the target gear based on the vehicle speed and the accelerator pedal operation amount with reference to the shift map in FIG. 4. Next, the ECU 100 determines whether the target gear matches the currently-selected gear that is determined in step ST4. If the currently-selected gear matches the target gear, both the upshifting lamp 31 and the downshifting lamp 32 are kept off.

If the currently-selected gear is different from the target gear, and the target gear is higher than the currently-selected gear (Nth gear), for example, if the target gear is (N + 1)th gear, as shown in FIG. 5A, only the upshifting lamp 31 is illuminated. On the other hand, if the currently-selected gear is different from the target gear, and the target gear is lower than the currently-selected gear (Nth gear), for example, if the target gear is (N - 1)th gear, as shown in FIG. 5B, only the downshifting lamp 32 is illuminated. After controlling the illumination/non-illumination states of the upshifting lamp 31 and the downshifting lamp 32, the ECU 100 ends the routine.

If a negative determination is made in step ST2, in other words, if it is determined in step ST2 that the absolute value of the deceleration G is equal to or larger than the threshold value, or if a negative determination is made in step ST3, in other words, if it is determined in step ST3 that the absolute value of the acceleration G is equal to or larger than the threshold value, the ECU 100 executes step ST6. In step ST6, the ECU 100 determines whether the calculated NVR has shifted from one NVR region to another NVR region. More specifically, the ECU 100 determines whether the calculated NVR has shifted from the NVR region corresponding to Nth gear to the NVR region corresponding to (N+1)th gear or the NVR region corresponding to (N-1)th gear. If a negative determination is made in step ST6, the ECU 100 executes step ST4 again. On the other hand, if an affirmative determination is made in step ST6, the ECU 100 executes step ST7.

In step ST7, even when the calculated NVR has shifted from one NVR region to another NVR region under hard acceleration or hard deceleration, determination of the currently-selected gear based on the NVR is prohibited and the gear which is determined immediately before prohibiting determination of the currently-selected gear is continuously set as the currently-selected gear, independently of the shift of the calculated NVR from one NVR region to the other NVR region.

More specifically, as shown in FIG. 7, when the calculated NVR (indicated by the solid line) has shifted from the NVR region corresponding to 1 st gear to the NVR ' region corresponding to 2nd gear under hard deceleration, 2nd gear is continuously set as the currently-selected gear (the currently-selected gear changes as indicated by the dashed line in FIG. 7) according to the control in the related art. In contrast, according to the embodiment of the invention, even when the calculated NVR has shifted from the NVR region corresponding to 1st gear to the NVR region corresponding to 2nd gear, the determination of the currently-selected gear based on the NVR is prohibited and the gear that is determined immediately before prohibiting determination of the currently-selected gear (1st gear) is continuously set as the currently-selected gear, independently of the shift of the calculated NVR from one NVR region corresponding to 1st gear to the NVR region corresponding to 2nd gear.

As shown in FIG 8, when the calculated NVR (indicated by the solid line) has shifted from the NVR region corresponding to 5th gear to the NVR region corresponding to 4th gear under hard acceleration, 4th gear is continuously set as the currently-selected gear (the currently-selected gear changes as indicated by the dashed line in FIG. 8) according to the control in the related art. In contrast, according to the control in the embodiment of the invention, even when the calculated NVR has shifted from the NVR region corresponding to 5th gear to the NVR region corresponding to 4th gear, the determination of the currently-selected gear based on the NVR is prohibited and the gear that is determined immediately before prohibiting determination of the currently-selected gear (5th gear) is continuously set as the currently-selected gear, independently of the shift of the calculated NVR from one NVR region corresponding to 5th gear to the NVR region corresponding to 4th gear.

Next, in step ST8, the ECU 100 prepares a gear-shift instruction, and controls the illumination/non-illumination states of the upshifting lamp 31 and downshifting lamp 32. More specifically, the ECU 100 calculates the vehicle speed based on a signal from the wheel speed sensor 12, and the accelerator pedal operation amount based on a signal from the accelerator pedal operation sensor 13. The ECU 100 then calculates the target gear based on the vehicle speed and the accelerator pedal operation amount with reference to the shift map in FIG 4. Next, the ECU 100 determines whether the currently-selected gear that is determined immediately before prohibiting determination of the currently-selected gear matches the target gear. If it is determined that the currently-selected gear (the gear that is determined immediately before prohibiting determination of the currently-selected gear) matches the target gear, both the upshifting lamp 31 and the downshifting lamp 32 are kept off.

If the currently-selected gear (the gear that is determined immediately before prohibiting determination of the currently-selected gear) is different from the target gear, and the target gear is higher than the currently-selected gear (Nth gear), for example; if the target gear is (N + 1)th gear, as shown in FIG. 5A, only the upshifting lamp 31 is illuminated. On the other hand, if the currently-selected gear is different from the target gear, and the target gear is lower than the currently-selected gear (Nth gear), for example, if the target gear is (N - 1)th gear, as shown in FIG 5B, only the downshifting lamp 32 is illuminated. After controlling the illumination/non-illumination states of the upshifting lamp 31 and the downshifting lamp 32, the ECU 100 ends the routine.

According to the control described above, determination of the currently-selected gear based on the NVR is prohibited and the gear that is determined immediately before prohibiting determination of the currently-selected gear (for example, 1st gear) is continuously set as the currently-selected gear, when the conditions that "the absolute value of the deceleration G is equal to or larger than the predetermined threshold value" and "the calculated NVR has shifted from one NVR region to another NVR region" are both satisfied. Thus, it is possible to avoid an erroneous determination on the currently-selected gear. As a result, it is possible to prevent occurrence of problem that an instruction to shift the manual transmission 2 to a lower gear is issued when the driver is selecting the lowest gear (I st gear) of the manual transmission 2. Further, even when the gear selected by the driver is other than 1 st gear, it is possible to prevent issuance of an erroneous instruction to shift the manual transmission 2 to a lower gear. As a result, it is possible to suppress deterioration of the fuel efficiency, the exhaust gas property, and the drivability.

According to the control described above, determination of the currently-selected gear based on the NVR is prohibited and the gear that is determined immediately before prohibiting determination of the currently-selected gear (for example, 5th gear) is continuously set as the currently-selected gear, when the conditions that "the absolute value of the acceleration G is equal to or larger than the predetermined threshold value" and "the calculated NVR has shifted from one NVR region to another NVR region" are both satisfied. Thus, it is possible to avoid an erroneous determination on the currently-selected gear. As a result, it is possible to prevent occurrence of problem that an instruction to shift the manual transmission 2 to a higher gear is issued when the gear selected by the driver is the highest gear (5th gear) of the manual transmission 2. Further, even when the gear selected by the driver is other than the highest gear (5th gear), it is possible to prevent issuance of an erroneous instruction to shift the manual transmission 2 to a higher gear. As a result, it is possible to suppress deterioration of the fuel efficiency, the exhaust gas property, and the drivability.

In the above mentioned embodiment of the invention, if the vehicle undergoes hard acceleration when 1 st gear of the manual transmission 2 has been selected, there is a possibility that the calculated NVR will shift out of the NVR region corresponding to 1 st gear (see FIG. 10). In this case, the ECU 100 determines that the currently-selected gear is indeterminate, and keeps both the upshifting lamp 31 and the downshifting lamp 32 off to avoid issuance of an erroneous instruction.

### Modified examples

In the embodiment of the invention described above, the acceleration sensor 15 is used as means for detecting the rate of change in the vehicle speed. If the longitudinal acceleration G or longitudinal deceleration G (the absolute value) that is detected by the acceleration sensor 15 is equal to or larger than the predetermined threshold value, determination of the currently-selected gear based on the NVR is prohibited. However, the invention is not limited to this. For example, an amount of change in the vehicle speed, which is determined based on a signal from the wheel speed sensor 12, per unit time is calculated at short time intervals. If the amount of change in the vehicle speed per unit time, that is, the rate of change in the vehicle speed is equal to or larger than a predetermined threshold value, the determination of the currently-selected gear based on the NVR may be prohibited.

In the embodiment of the invention described above, determination of the currently-selected gear based on the NVR is prohibited and the gear that is determined immediately before prohibiting determination of the currently-selected gear is continuously set as the currently-selected gear (step ST7 in FIG. 6), when the conditions' that "the absolute value of the deceleration G or the acceleration G is equal to or larger than the predetermined threshold value" and "the calculated NVR has shifted from one NVR region to another NVR region" are both satisfied. However, the invention is not limited to this. For example, it may be determined that the currently-selected gear cannot be determined and a gear-shift instruction cannot be issued, when the above-described conditions are satisfied to avoid issuance of an erroneous instruction.

In the embodiment of the invention described above, a gear-shift instruction is provided to the driver by controlling the illumination/non-illumination states of the upshifting lamp 31 and downshifting lamp 32. However, the invention is not limited to this. For example, the upshifting lamp 31 and the downshifting lamp 32, which are used to issue gear-shift instructions, may blink when necessary. Alternatively, light emitters each of which has a single color, or at least one light emitter that has more than two colors may be embedded. In this case, each emitting color signifies a specific instruction. Instead of using the upshifting lamp 31 and the downshifting lamp 32, which are used to issue gear-shift instructions, sound or voice that indicates a gear-shift instruction may be output.

In addition, the shift map used in the gear-shift instruction control is not limited to the shift map shown in FIG. 4. A shift map, that has shift lines appropriately prepared, may be used in the gear-shift instruction control.

In the embodiment described above, the invention is applied to determination of the gear of the five-speed manual transmission 2 and the gear-shift instruction control for the five-speed manual transmission 2. However, the invention is not limited to this. The invention may be applied to determination of the gear of transmissions having any number of gears and the gear-shift instruction control for the transmissions having any number of gears.

Furthermore, the invention may be applied not only to determination of the gear of the manual transmission and the gear-shift instruction control for the manual transmission but also to determination of the gear of an automatic transmission with a manual gear-shift function and the gear-shift instruction control for the automatic transmission with a manual gear-shift function. The automatic transmission with a manual gear-shift function is widely used. For example, this type transmission is provided with a lever that can be operated forward and rearward. The forward operation shifts the transmission to a higher gear, and the rearward operation shifts the transmission to a lower gear. This type of transmission is so-called a sequential shift transmission.

In the embodiment of the invention, the upshifting lamp 31 and the downshifting lamp 32 are provided in the combination meter 3. However, the positions of the upshifting lamp 31 and the downshifting lamp 32 are not particularly limited. For example, the upshifting lamp 31 and the downshifting lamp 32 may be arranged near the combination meter 3 instead of being arranged in the combination meter 3. In addition, a navigation system that is well known, or a head-up display system that projects information on a windshield of the vehicle may be used to indicate a gear-shift instruction.

## Claims

1. A gear determination apparatus that is adapted to be applied to a vehicle including an engine (1) and a transmission (2) that is manually operable, and that determines a gear of the transmission, comprising:
an engine speed detection unit (11) that detects a rotational speed of the engine;
a vehicle speed detection unit (12) that detects a vehicle speed based on a wheel speed;
a gear determination unit that determines a currently-selected gear based on a ratio of the engine speed to the vehicle speed; and
a vehicle speed change detection unit (15) that detects a rate of change in the vehicle speed,
wherein
the gear determination unit is configured to prohibit the determination of the currently-selected gear when the rate of change in the vehicle speed (G), which is detected by the vehicle speed change detection unit (15), is equal to or higher than a predetermined value.

2. The gear determination apparatus according to claim 1, wherein the determination of the currently-selected gear is prohibited when the rate of change in the vehicle speed (G) is equal to or higher than the predetermined value and the ratio of the engine speed to the vehicle speed has shifted to a ratio region corresponding to a gear that is higher or lower than a gear, which is determined as the currently-selected gear immediately before the vehicle speed starts changing.

3. The gear determination apparatus according to claim 1 or 2, wherein, when the gear determination unit prohibits the determination of the currently-selected gear, the gear determination unit continuously sets a gear, which is determined immediately before prohibiting the determination of the currently-selected gear, as the currently-selected gear.

4. The gear determination apparatus according to claim 1 or 2, wherein, when the gear determination unit prohibits the determination of the currently-selected gear, the gear determination unit determines that the currently-selected gear is indeterminate.

5. The gear determination apparatus according to any one of claims 1 to 4, wherein the transmission (2) is a manual transmission.

6. The gear determination apparatus according to any one of claims 1 to 4, wherein the transmission (2) is an automatic transmission with a manual gear-shift function.

7. The gear determination apparatus according to any one of claims 1 to 6,
wherein:
the vehicle speed change detection unit (15) is an acceleration sensor; and
the gear determination unit prohibits the determination of the currently-selected gear when an absolute value of a longitudinal acceleration or a longitudinal deceleration, which is detected by the acceleration sensor, is equal to or larger than a predetermined threshold value.

8. The gear determination apparatus according to any one of claims 1 to 6,
wherein:
the vehicle speed change detection unit (15) includes a wheel speed sensor (12);
the vehicle speed change detection unit (15) calculates an amount of change in the vehicle speed per unit time at short time intervals based on a signal from the wheel speed sensor (12); and
the gear determination unit prohibits the determination of the currently-selected gear when the amount of change in the vehicle speed per unit time is equal to or larger than a predetermined threshold value.

9. A gear-shift instruction apparatus that is adapted to be applied to a vehicle including an engine (1) and a transmission (2) that is manually operable, and that provides a driver with a gear-shift instruction based on a cruising condition of the vehicle, comprising:
the gear determination apparatus according to any one of claims 1 to 8; and
a gear-shift instruction control unit that provides the driver with a gear-shift instruction based on a currently-selected gear that is determined by the gear determination unit of said gear determination apparatus.

10. The gear-shift instruction apparatus according to claim 9, wherein the gear-shift instruction control unit compares a target gear of the transmission (2), which is calculated based on the cruising condition of the vehicle, with the currently-selected gear that is determined by the gear determination unit, and provides a gear-shift instruction based on a result of comparison.

11. The gear-shift instruction apparatus according to claim 10, wherein the gear-shift instruction control unit calculates the target gear based on a vehicle speed and an accelerator pedal operation amount or based on the vehicle speed and a throttle valve opening amount with reference to a map.

12. A gear determination method that is adapted to be applied to a vehicle including an engine (1) and a transmission (2) that is manually operable, and that determines a gear of the transmission, comprising:
detecting a rotational speed of the engine;
detecting a vehicle speed based on a wheel speed;
determining a currently-selected gear based on a ratio of the engine speed to the vehicle speed;
detecting a rate of change in the vehicle speed (G); and
prohibiting the determination of the currently-selected gear when the detected rate of change in the vehicle speed is equal to or higher than a predetermined value.

13. The gear determination method according to claim 12, wherein the determination of the currently-selected gear is prohibited when the rate of change in the vehicle speed (G) is equal to or higher than the predetermined value and the ratio of the engine speed to the vehicle speed has shifted to a ratio region corresponding to a gear that is higher or lower than a gear, which is determined as the currently-selected gear immediately before the vehicle speed starts changing.

14. The gear determination method according to claim 12 or 13, wherein, when the determination of the currently-selected gear is prohibited, a gear, which is determined immediately before prohibiting the determination of the currently-selected gear, is continuously set as the currently-selected gear.

15. The gear determination method according to claim 12 or 13 wherein, when the determination of the currently-selected gear is prohibited, it is determined that the currently-selected gear is indeterminate.

16. The gear determination method according to any one of claims 12 to 15, wherein the transmission (2) is a manual transmission.

17. The gear determination method according to any one of claims 12 to 15, wherein the transmission (2) is an automatic transmission with a manual gear-shift function.

18. The gear determination method according to any one of claims 12 to 17, wherein the determination of the currently-selected gear is prohibited when an absolute value of a longitudinal acceleration or a longitudinal deceleration, which is detected by an acceleration sensor, is equal to or larger than a predetermined threshold value.

19. The gear determination method according to any one of claims 12 to 17, wherein
an amount of change in the vehicle speed per unit time is calculated at short time intervals based on a signal from a wheel speed sensor (12); and
the determination of the currently-selected gear is prohibited when the amount of change in the vehicle speed per unit time is equal to or larger than a predetermined threshold value.

20. A gear-shift instruction method that is adapted to be applied to a vehicle including an engine and a transmission that is manually operable, and that provides a driver with a gear-shift instruction based on a cruising condition of the vehicle, comprising:
determining a currently-selected gear by the gear determination method according to any one of claims 12 to 19; and
providing the driver with a gear-shift instruction based on the currently-selected gear that is determined by said gear determination method.

21. The gear-shift instruction method according to claim 20, wherein a target gear of the transmission, which is calculated based on the cruising condition of the vehicle, is compared with the currently-selected gear that is determined by said gear determination method, and a gear-shift instruction is provided based on a result of comparison.

22. The gear-shift instruction method according to claim 21, wherein the target gear is calculated based on a vehicle speed and an accelerator pedal operation amount or based on the vehicle speed and a throttle valve opening amount with reference to a map.

## Patentansprüche

1. Gangbestimmungsvorrichtung, die zum Einsatz in einem Fahrzeug geeignet ist, welches einen Motor (1) und ein manuell betätigbares Getriebe (2) aufweist, und die einen Gang des Getriebes bestimmt, wobei diese aufweist:
eine Motordrehzahlerfassungseinheit (11), die eine Motordrehzahl erfasst;
eine Fahrzeuggeschwindigkeitserfassungseinheit (12), die auf der Grundlage einer Radgeschwindigkeit eine Fahrzeuggeschwindigkeit erfasst;
eine Gangbestimmungseinheit, die auf der Grundlage eines Verhältnisses von Motordrehzahl zu Fahrzeuggeschwindigkeit einen momentan ausgewählten Gang bestimmt; und
eine Fahrzeuggeschwindigkeitsänderungserfassungseinheit (15), die eine Änderungsrate der Fahrzeuggeschwindigkeit erfasst, wobei
die Gangbestimmungseinheit so konfiguriert ist, dass sie die Bestimmung des momentan ausgewählten Gangs verhindert, wenn die Änderungsrate der Fahrzeuggeschwindigkeit (G), welche durch die Fahrzeuggeschwindigkeitsänderungserfassungseinheit (15) erfasst wird, gleich oder höher als ein vorbestimmter Wert ist.

2. Gangbestimmungsvorrichtung gemäß Anspruch 1, wobei die Bestimmung des momentan ausgewählten Gangs verhindert wird, wenn die Änderungsrate der Fahrzeuggeschwindigkeit (G) gleich oder höher als der vorbestimmte Wert ist und sich das Verhältnis von Motordrehzahl zu Fahrzeuggeschwindigkeit in einen Verhältnisbereich verschoben hat, der einem Gang entspricht, der höher oder niedriger als ein Gang ist, der unmittelbar vor der Fahrzeuggeschwindigkeitsänderung als der momentan ausgewählte Gang bestimmt worden ist.

3. Gangbestimmungsvorrichtung gemäß Anspruch 1 oder 2, wobei, wenn die Gangbestimmungseinheit die Bestimmung des momentan ausgewählten Gangs verhindert, die Gangbestimmungseinheit kontinuierlichen einen Gang, welcher unmittelbar vor dem Verhindern der Bestimmung des momentan ausgewählten Gangs bestimmt worden ist, als den momentan ausgewählten Gang festlegt.

4. Gangbestimmungsvorrichtung gemäß Anspruch 1 oder 2, wobei, wenn die Gangbestimmungseinheit die Bestimmung des momentan ausgewählten Gangs verhindert, die Gangbestimmungseinheit bestimmt, dass der momentan ausgewählte Gang unbestimmt ist.

5. Gangbestimmungsvorrichtung gemäß einem der Ansprüche 1 bis 4, wobei das Getriebe (2) ein manuelles Getriebe ist.

6. Gangbestimmungsvorrichtung gemäß einem der Ansprüche 1 bis 4, wobei das Getriebe (2) ein automatisches Getriebe mit einer manuellen Gangschaltfunktion ist.

7. Gangbestimmungsvorrichtung gemäß einem der Ansprüche 1 bis 6, wobei
die Fahrzeuggeschwindigkeitsänderungserfassungseinheit (15) ein Beschleunigungssensor ist; und
die Gangbestimmungseinheit die Bestimmung des momentan ausgewählten Gangs verhindert, wenn ein Absolutwert einer Längsbeschleunigung oder einer Längsverzögerung, welche durch den Beschleunigungssensor erfasst wird, gleich oder größer als ein vorbestimmter Schwellenwert ist.

8. Gangbestimmungsvorrichtung gemäß einem der Ansprüche 1 bis 6, wobei
die Fahrzeuggeschwindigkeitsänderungseinheit (15) einen Radgeschwindigkeitssensor (12) aufweist;
die Fahrzeuggeschwindigkeitsänderungserfassungseinheit (15) einen Änderungsbetrag der Fahrzeuggeschwindigkeit pro Zeiteinheit in kurzen Zeitintervallen auf der Grundlage eines Signals von dem Radgeschwindigkeitssensor (12) berechnet; und
die Gangbestimmungseinheit die Bestimmung des momentan ausgewählten Gangs verhindert, wenn der Änderungsbetrag der Fahrzeuggeschwindigkeit pro Zeiteinheit größer oder gleich einem vorbestimmten Schwellenwert ist.

9. Gangschaltanweisungsvorrichtung, die zum Einsatz in einem Fahrzeug geeignet ist, welches einen Motor (1) und ein manuell betätigbares Getriebe (12) aufweist, und die einem Fahrer eine Gangschaltanweisung auf der Grundlage einer Fahrbedingung des Fahrzeugs bereitstellt, wobei diese aufweist:
die Gangbestimmungsvorrichtung gemäß einem der Ansprüche 1 bis 8; und
eine Gangschaltanweisungssteuerung, welche den Fahrer mit einer Gangschaltanweisung auf der Grundlage eines momentan ausgewählten Gangs versorgt, welcher durch die Gangbestimmungseinheit der Gangbestimmungsvorrichtung bestimmt wurde.

10. Gangschaltanweisungsvorrichtung gemäß Anspruch 9, wobei die Gangschaltanweisungssteuereinheit einen Sollgang des Getriebes (2), der auf der Grundlage der Fahrbedingung des Fahrzeugs berechnet wurde, mit einem momentan ausgewählten Gang vergleicht, welcher durch die Gangbestimmungseinheit bestimmt wurde, und auf der Grundlage eines Vergleichsergebnisses eine Gangschaltanweisung liefert.

11. Gangschaltanweisungsvorrichtung gemäß Anspruch 10, wobei die Gangschaltanweisungssteuereinheit den Sollgang auf der Grundlage einer Fahrzeuggeschwindigkeit und eines Gaspedalbetätigungsbetrags oder auf der Grundlage der Fahrzeuggeschwindigkeit und eines Drosselventilöffnungsbetrags mit Bezug auf ein Kennfeld berechnet.

12. Gangbestimmungsverfahren, das zum Einsatz in einem Fahrzeug geeignet ist, welches einen Motor (1) und ein manuell betätigbares Getriebe (2) aufweist, und das einen Gang des Getriebes bestimmt, wobei dieses aufweist:
Erfassen einer Motordrehzahl;
Erfassen einer Fahrzeuggeschwindigkeit auf der Grundlage einer Radgeschwindigkeit;
Bestimmen eines momentan ausgewählten Gangs auf der Grundlage eines Verhältnisses von Motordrehzahl zu Fahrzeuggeschwindigkeit;
Erfassen einer Änderungsrate der Fahrzeuggeschwindigkeit (G); und
Verhindern der Bestimmung des momentan ausgewählten Gangs, wenn die erfasste Änderungsrate der Fahrzeuggeschwindigkeit gleich oder höher als ein vorbestimmter Wert ist.

13. Gangbestimmungsverfahren gemäß Anspruch 12, wobei die Bestimmung des momentan ausgewählten Gangs verhindert wird, wenn die Änderungsrate der Fahrzeuggeschwindigkeit (G) gleich oder höher als der vorbestimmte Wert ist und sich das Verhältnis von Motordrehzahl zu Fahrzeuggeschwindigkeit in einen Verhältnisbereich verschoben hat, der einem Gang entspricht, der höher oder niedriger als ein Gang ist, der unmittelbar vor der Fahrzeuggeschwindigkeitsänderung als der momentan ausgewählte Gang bestimmt wurde.

14. Gangbestimmungsverfahren gemäß Anspruch 12 oder 13, wobei, wenn die Bestimmung des momentan ausgewählten Gangs verhindert wird, ein Gang, der unmittelbar vor dem Verhindern der Bestimmung des momentan ausgewählten Gangs bestimmt wurde, kontinuierlich als der momentan ausgewählte Gang festgelegt wird.

15. Gangbestimmungsverfahren gemäß Anspruch 12 oder 13, wobei, wenn die Bestimmung des momentan ausgewählten Gangs verhindert wird, bestimmt wird, dass der momentan ausgewählte Gang unbestimmt ist.

16. Gangbestimmungsverfahren gemäß einem der Ansprüche 12 bis 15, wobei das Getriebe (2) ein manuelles Getriebe ist.

17. Gangbestimmungsverfahren gemäß einem der Ansprüche 12 bis 15, wobei das Getriebe (2) ein automatisches Getriebe mit einer manuellen Gangschaltfunktion ist.

18. Gangbestimmungsverfahren gemäß einem der Ansprüche 12 bis 17, wobei die Bestimmung des momentan ausgewählten Gangs verhindert wird, wenn ein Absolutwert einer Längsbeschleunigung oder einer Längsverzögerung, welche durch einen Beschleunigungssensor erfasst wird, gleich oder höher als ein vorbestimmter Schwellenwert ist.

19. Gangbestimmungsverfahren gemäß einem der Ansprüche 12 bis 17, wobei
ein Änderungsbetrag der Fahrzeuggeschwindigkeit pro Zeiteinheit in kurzen Zeitintervallen auf der Grundlage eines Signals von einem Radgeschwindigkeitssensor (12) berechnet wird; und
die Bestimmung des momentan ausgewählten Gangs verhindert wird, wenn der Änderungsbetrag der Fahrzeuggeschwindigkeit pro Zeiteinheit gleich oder größer als ein vorbestimmter Schwellenwert ist.

20. Gangschaltanweisungsverfahren, das zum Einsatz in einem Fahrzeug geeignet ist, welches einen Motor und ein manuell betätigbares Getriebe aufweist, und das einem Fahrer eine Gangschaltanweisung auf der Grundlage einer Fahrbedingung des Fahrzeugs zur Verfügung stellt, wobei dieses aufweist:
Bestimmen eines momentan ausgewählten Gangs durch das Gangbestimmungsverfahren gemäß einem der Ansprüche 12 bis 19; und
Bereitstellen einer Gangschaltinformation auf der Grundlage des durch das Gangbestimmungsverfahren bestimmten momentan ausgewählten Gangs dem Fahrer.

21. Gangschaltanweisungsverfahren gemäß Anspruch 20, wobei ein Sollgang des Getriebes, welcher auf der Grundlage der Fahrbedingung des Fahrzeugs berechnet wurde, mit dem momentan ausgewählten Gang, der durch das Gangbestimmungsverfahren bestimmt wurde, verglichen wird und eine Gangschaltanweisung auf der Grundlage eines Vergleichsergebnisses bereitgestellt wird.

22. Gangschaltanweisungsverfahren gemäß Anspruch 21, wobei der Sollgang auf der Grundlage einer Fahrzeuggeschwindigkeit und eines Gaspedalbetätigungsbetrags oder auf der Grundlage der Fahrzeuggeschwindigkeit und eines Drosselventilöffnungsbetrags mit Bezug auf ein Kennfeld berechnet wird.

## Revendications

1. Appareil de détermination de vitesse qui est adapté pour être appliqué sur un véhicule comprenant un moteur (1) et une transmission (2) qui peut être actionnée manuellement, et qui détermine une vitesse de la transmission, comprenant :
une unité de détection de vitesse de moteur (11) qui détecte une vitesse de rotation du moteur ;
une unité de détection de vitesse de véhicule (12) qui détecte une vitesse du véhicule en fonction d'une vitesse de roue ;
une unité de détermination de vitesse qui détermine une vitesse actuellement sélectionnée en fonction d'un rapport de la vitesse du moteur sur la vitesse du véhicule ; et
une unité de détection de changement de vitesse de véhicule (15) qui détecte un taux de variation concernant la vitesse du véhicule;
dans lequel :
l'unité de détermination de vitesse est configurée pour empêcher la détermination de la vitesse actuellement sélectionnée lorsque le taux de variation de la vitesse (G) du véhicule, qui est détecté par l'unité de détection de changement de vitesse de véhicule (15), est égal ou supérieur à une valeur prédéterminée.

2. Appareil de détermination de vitesse selon la revendication 1, dans lequel la détermination de la vitesse actuellement sélectionnée est empêchée lorsque le taux de variation de la vitesse (G) du véhicule est égal ou supérieur à la valeur prédéterminée et que le rapport de la vitesse du moteur sur la vitesse du véhicule s'est déplacé dans une région de rapport correspondant à une vitesse qui est supérieure ou inférieure à une vitesse qui est déterminée comme étant la vitesse actuellement sélectionnée immédiatement avant que la vitesse du véhicule ne commence à changer.

3. Appareil de détermination de vitesse selon la revendication 1 ou 2, dans lequel, lorsque l'unité de détermination de vitesse empêche la détermination de la vitesse actuellement sélectionnée, l'unité de détermination de vitesse règle de manière continue une vitesse qui est déterminée immédiatement avant l'empêchement de la détermination de la vitesse actuellement sélectionnée, en tant que vitesse actuellement sélectionnée.

4. Appareil de détermination de vitesse selon la revendication 1 ou 2, dans lequel, lorsque l'unité de détermination de vitesse empêche la détermination de la vitesse actuellement sélectionnée, l'unité de détermination de vitesse détermine que la vitesse actuellement sélectionnée est indéterminée.

5. Appareil de détermination de vitesse selon l'une quelconque des revendications 1 à 4, dans lequel la transmission (2) est une transmission manuelle.

6. Appareil de détermination de vitesse selon l'une quelconque des revendications 1 à 4, dans lequel la transmission (2) est une transmission automatique avec une fonction de changement de vitesse manuelle.

7. Appareil de détermination de vitesse selon l'une quelconque des revendications 1 à 6, dans lequel :
l'unité de détection de changement de vitesse du véhicule (15) est un capteur d'accélération ; et
l'unité de détermination de vitesse empêche la détermination de la vitesse actuellement sélectionnée lorsqu'une valeur absolue d'une accélération longitudinale ou d'un ralentissement longitudinal, qui est détectée par le capteur d'accélération, est égale ou supérieure à une valeur de seuil prédéterminée.

8. Appareil de détermination de vitesse selon l'une quelconque des revendications 1 à 6, dans lequel :
l'unité de détection de changement de vitesse du véhicule (15) comprend un capteur de vitesse de roue (12) ;
l'unité de détection de changement de vitesse du véhicule (15) calcule une quantité de changement concernant la vitesse du véhicule par unité de temps à brefs intervalles de temps en fonction d'un signal provenant du capteur de vitesse de roue (12) ; et
l'unité de détermination de vitesse empêche la détermination de la vitesse actuellement sélectionnée lorsque la quantité de changement de la vitesse du véhicule par unité de temps est égale ou supérieure à une valeur de seuil prédéterminée.

9. Appareil d'instruction de changement de vitesse qui est adapté pour être appliqué sur un véhicule comprenant un moteur (1) et une transmission (2) qui peut être actionnée manuellement, et qui fournit à un conducteur une instruction de changement de vitesse en fonction d'une condition de croisière du véhicule, comprenant :
l'appareil de détermination de vitesse selon l'une quelconque des revendications 1 à 8 ; et
une unité de commande d'instruction de changement de vitesse qui fournit au conducteur une instruction de changement de vitesse en fonction d'une vitesse actuellement sélectionnée qui est déterminée par l'unité de détermination de vitesse dudit appareil de détermination de vitesse.

10. Appareil d'instruction de changement de vitesse selon la revendication 9, dans lequel l'unité de commande d'instruction de changement de vitesse compare une vitesse cible de la transmission (2), qui est calculée en fonction de la condition de croisière du véhicule, avec la vitesse actuellement sélectionnée qui est déterminée par l'unité de détermination de vitesse, et fournit une instruction de changement de vitesse en fonction d'un résultat de comparaison.

11. Appareil d'instruction de changement de vitesse selon la revendication 10, dans lequel l'unité de commande d'instruction de changement de vitesse calcule la vitesse cible en fonction d'une vitesse du véhicule et d'une quantité d'opération de pédale d'accélérateur ou en fonction de la vitesse du véhicule et d'une quantité d'ouverture du papillon des gaz en référence à une carte.

12. Procédé de détermination de vitesse qui est adapté pour être appliqué à un véhicule comprenant un moteur (1) et une transmission (2) qui peut être actionnée manuellement, et qui détermine une vitesse de la transmission, comprenant les étapes consistant à :
détecter une vitesse de rotation du moteur ;
détecter une vitesse du véhicule en fonction d'une vitesse de roue ;
déterminer une vitesse actuellement sélectionnée en fonction d'un rapport de la vitesse du moteur sur la vitesse du véhicule ;
détecter un taux de variation de la vitesse (G) du véhicule ; et
empêcher la détermination de la vitesse actuellement sélectionnée lorsque le taux de variation détecté concernant la vitesse du véhicule est égal ou supérieur à une valeur prédéterminée.

13. Procédé de détermination de vitesse selon la revendication 12, dans lequel la détermination de la vitesse actuellement sélectionnée est empêchée lorsque le taux de variation de la vitesse (G) du véhicule est égal ou supérieur à une valeur prédéterminée et que le rapport de la vitesse du moteur sur la vitesse du véhicule s'est déplacé dans une région de rapport correspondant à une vitesse qui est supérieure ou inférieure à une vitesse qui est déterminée comme étant la vitesse actuellement sélectionnée, immédiatement avant que la vitesse du véhicule ne commence à changer.

14. Procédé de détermination de vitesse selon la revendication 12 ou 13, dans lequel, lorsque la détermination de la vitesse actuellement sélectionnée est empêchée, une vitesse, qui est déterminée immédiatement avant l'empêchement de la détermination de la vitesse actuellement sélectionnée, est réglée de manière continue comme étant la vitesse actuellement sélectionnée.

15. Procédé de détermination de vitesse selon la revendication 12 ou 13, dans lequel, lorsque la détermination de la vitesse actuellement sélectionnée est empêchée, on détermine que la vitesse actuellement sélectionnée est indéterminée.

16. Procédé de détermination de vitesse selon l'une quelconque des revendications 12 à 15, dans lequel la transmission (2) est une transmission manuelle.

17. Procédé de détermination de vitesse selon l'une quelconque des revendications 12 à 15, dans lequel la transmission (2) est une transmission automatique avec une fonction de changement de vitesse manuelle.

18. Procédé de détermination de vitesse selon l'une quelconque des revendications 12 à 17, dans lequel la détermination de la vitesse actuellement sélectionnée est empêchée lorsqu'une valeur absolue d'une accélération longitudinale ou d'un ralentissement longitudinal, qui est détectée par un capteur d'accélération, est égale ou supérieure à une valeur de seuil prédéterminée.

19. Procédé de détermination de vitesse selon l'une quelconque des revendications 12 à 17, dans lequel :
une quantité de changement de la vitesse du véhicule par unité de temps est calculée à brefs intervalles de temps en fonction d'un signal provenant du capteur de vitesse de roue (12) ; et
la détermination de la vitesse actuellement sélectionnée est empêchée lorsque la quantité de variation concernant la vitesse de véhicule par unité de temps est égale ou supérieure à une valeur de seuil prédéterminée.

20. Procédé d'instruction de changement de vitesse qui est adapté pour être appliqué sur un véhicule comprenant un moteur et une transmission qui peut être actionnée manuellement, et qui fournit à un conducteur une instruction de changement de vitesse en fonction d'une condition de croisière du véhicule, comprenant les étapes consistant à :
détecter une vitesse actuellement sélectionnée par le procédé de détermination de vitesse selon l'une quelconque des revendications 12 à 19 ; et
fournir au conducteur une instruction de changement de vitesse en fonction de la vitesse actuellement sélectionnée qui est déterminée par ledit procédé de détermination de vitesse.

21. Procédé d'instruction de changement de vitesse selon la revendication 20, dans lequel une vitesse cible de la transmission, qui est calculée en fonction de la condition de croisière du véhicule, est comparée avec la vitesse actuellement sélectionnée qui est déterminée par ledit procédé de détermination de vitesse, et on fournit une instruction de changement de vitesse en fonction d'un résultat de comparaison.

22. Procédé d'instruction de changement de vitesse selon la revendication 21, dans lequel la vitesse cible est calculée en fonction d'une vitesse de véhicule et d'une quantité d'opération de pédale d'accélérateur ou en fonction de la vitesse du véhicule et d'une quantité d'ouverture du papillon des gaz en référence à une carte.
